(19) Europäisches Patentamt
European Patent Office
Office européen des brevets

(11) **EP 2 408 238 A1**

(12) **EUROPEAN PATENT APPLICATION**

(43) Date of publication:
**18.01.2012 Bulletin 2012/03**

(51) Int Cl.:
*H04W 52/10* (2009.01)  *H04W 52/14* (2009.01)
*H04W 52/54* (2009.01)

(21) Application number: **11173539.5**

(22) Date of filing: **12.07.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **12.07.2010 KR 20100066892**

(71) Applicant: **SAMSUNG ELECTRONICS CO., LTD.**
**Suwon-si**
**Gyeonggi-do 442-742 (KR)**

(72) Inventor: **Park, Jeong-Ho**
**442-742 Gyeonggi-do (KR)**

(74) Representative: **Grünecker, Kinkeldey,**
**Stockmair & Schwanhäusser**
**Anwaltssozietät**
**Leopoldstrasse 4**
**80802 München (DE)**

(54) **Apparatus and method for reporting uplink transmission power status in a mobile communication system**

(57)     A mobile communication system is provided. In the mobile communication system, an Advanced Mobile Station (AMS) receives an UpLink (UL) Noise and Interference (NI) level, a target Signal to Interference and Noise Ratio (SINR), and an Offset, receives parameters needed for reporting a UL Tx power status, updates the Offset, and transmits a UL Transmission (Tx) power status report header including information indicating the updated Offset, to an Advanced Base Station (ABS).

FIG.1

**Description**

## BACKGROUND OF THE INVENTION

1. Field of the Invention:

The present invention relates to an apparatus and method for reporting uplink transmission power status in a mobile communication system. More particularly, the present invention relates to allowing a Mobile Station (MS) to trigger power control by reporting its UpLink (UL) Tx power status in a mobile communication system.

2. Description of the Related Art:

Mobile communication systems use DownLink (DL) and UpLink (UL) Transmission (Tx) power control schemes to increase the system capacity and improve Quality of Service (QoS). To increase efficiency of the UL Tx power control scheme, the mobile communication systems may use a UL Tx power status reporting scheme in which a Mobile Station (MS) reports its current UL Tx power status to a Base Station (BS).

However, the UL Tx power status reporting scheme presently used in the mobile communication systems does not take into account the possible case where an MS may adjust its UL Tx power by itself. In the current UL Tx power status reporting scheme, an MS may report its UL Tx power status if the MS meets a triggering condition(s) defined by a BS. This scheme is available only when an MS does not adjust its UL Tx power by itself, and the possibility that an MS may spontaneously adjust its UL Tx power is not taken into account.

Accordingly, an MS may not report a change in its UL Tx power status to a BS even though the MS needs to adjust its UL Tx power by itself for several reasons, making it difficult to adjust the UL Tx power. Because an MS may not report a change in its UL Tx power status to a BS even though it can adjust its UL Tx power spontaneously, the BS has no way to detect a change in the UL Tx power status of the MS. In this case, the BS may not precisely control the UL Tx power of the MS.

If an MS does not adjust its UL Tx power as required, or does not report a change in its UL Tx power status to a BS as stated above, it is not possible to precisely control the UL Tx power, resulting in a degradation of the entire performance of the mobile communication system. In addition, when a BS cannot accurately detect the UL Tx power status of an MS, scheduling may not be performed correctly.

## SUMMARY OF THE INVENTION

Aspects of the present invention are to address at least the above-mentioned problems and/or disadvantages and to provide at least the advantages described below. Accordingly, an aspect of the present invention is to provide an apparatus and method for reporting an UpLink (UL) Transmission (Tx) power status in a mobile communication system.

Another aspect of the present invention is to provide an apparatus and method for allowing an MS to trigger power control by reporting its UL Tx power status in a mobile communication system.

In accordance with one aspect of the present invention, a method for reporting an UL Tx power status by an Advanced Mobile Station (AMS) in a mobile communication system is provided. The method includes transmitting to an Advanced Base Station (ABS) a UL Tx power status report header, a sum of a DownLink (DL) path loss measured by the AMS and a UL Noise and Interference (NI) level measured by the ABS, and a DL Signal to Interference Ratio (SIR) measured by the AMS. The UL Tx power status report header includes a UL Tx power control parameter updating indicator indicating whether UL Tx power control parameters have been updated.

In accordance with another aspect of the present invention, a method for receiving a report on an UL Tx power status by an ABS in a mobile communication system is provided. The method includes receiving from an AMS a UL Tx power status report header, a sum of a DL path loss measured by the AMS and a UL NI level measured by the ABS, and a DL SIR measured by the AMS. The UL Tx power status report header includes a UL Tx power control parameter updating indicator indicating whether UL Tx power control parameters have been updated.

In accordance with another aspect of the present invention, an AMS in a mobile communication system is provided. The AMS includes a transmitter for transmitting to an ABS a UL Tx power status report header, a sum of a DL path loss measured by the AMS and a UL NI level measured by the ABS, and a DL SIR measured by the AMS. The UL Tx power status report header includes a UL Tx power control parameter updating indicator indicating whether UL Tx power control parameters have been updated.

In accordance with another aspect of the present invention, an ABS in a mobile communication system is provided. The ABS includes a receiver for receiving from an AMS an UL Tx power status report header, a sum of a DL path loss measured by the AMS and a UL NI level measured by the ABS, and a DL SIR measured by the AMS. The UL Tx power status report header includes a UL Tx power control parameter updating indicator indicating whether UL Tx power control parameters have been updated.

Other aspects, advantages, and salient features of the invention will become apparent to those skilled in the art from the following detailed description, which, taken in conjunction with the annexed drawings, discloses exemplary embodiments of the invention.

## BRIEF DESCRIPTION OF THE DRAWINGS

The above and other aspects, features, and advantages of certain exemplary embodiments of the present invention will be more apparent from the following description taken in conjunction with the accompanying drawings, in which:

FIG. 1 is a flowchart illustrating a process of receiving a report on an UpLink (UL) Transmission (Tx) power status by an Advanced Base Station (ABS) in an Institute of Electrical and Electronics Engineers (IEEE) 802.16m communication system according to an exemplary embodiment of the present invention;

FIG. 2 is a flowchart illustrating a process of reporting a UL Tx power status by an Advanced Mobile Station (AMS) in an IEEE 802.16m communication system according to an exemplary embodiment of the present invention;

FIG. 3 is a diagram illustrating an internal structure of an ABS in an IEEE 802.16m communication system according to an exemplary embodiment of the present invention; and

FIG. 4 is a diagram illustrating an internal structure of an AMS in an IEEE 802.16m communication system according to an exemplary embodiment of the present invention.

Throughout the drawings, it should be noted that like reference numbers are used to depict the same or similar elements, features, and structures.

## DETAILED DESCRIPTION OF EXEMPLARY EMBODIMENTS

The following description with reference to the accompanying drawings is provided to assist in a comprehensive understanding of exemplary embodiments of the invention as defined by the claims and their equivalents. It includes various specific details to assist in that understanding, but these are to be regarded as merely exemplary. Accordingly, those of ordinary skill in the art will recognize that various changes and modifications of the embodiments described herein can be made without departing from the scope and spirit of the invention. In addition, descriptions of well-known functions and constructions are omitted for clarity and conciseness.

The terms and words used in the following description and claims are not limited to the bibliographical meanings, but are merely used by the inventor to enable a clear and consistent understanding of the invention. Accordingly, it should be apparent to those skilled in the art that the following description of exemplary embodiments of the present invention is provided for illustration purposes only and not for the purpose of limiting the invention as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

Exemplary embodiments of the present invention provide an apparatus and method for reporting an UpLink (UL) Transmission (Tx) power status in a mobile communication system. In addition, exemplary embodiments of the present invention provide an apparatus and method, in which a Mobile Station (MS) triggers power control by reporting its UL Tx power status to a Base Station (BS) in a mobile communication system.

Although an Orthogonal Frequency Division Multiplexing Access (OFDMA)-based Institute of Electrical and Electronics Engineers (IEEE) 802.16m communication system will be considered an example of the mobile communication system, it will be understood by those of ordinary skill in the art that the UL Tx power status reporting apparatus and method according to exemplary embodiments of the present invention may be applied to other communication systems.

The UL Tx power status reporting apparatus and method according to exemplary embodiments of the present invention may also be useful for mobile communication systems in which an MS may spontaneously adjust its UL Tx power. For convenience of description, an MS will be referred to as an Advanced Mobile Station (AMS) and a BS will be referred to as an Advanced Base Station (ABS).

The UL Tx power control scheme currently used in the IEEE 802.16m communication system is as defined in Equation (1).

$$P \, [\text{dBm}] = L + \text{SINR}_{\text{Target}} + NI + \text{Offset} \quad \ldots \ldots \ldots (1)$$

where P represents UL Tx power, L represents a DownLink (DL) path loss measured by an AMS, $SINR_{Target}$ represents a target Signal to Interference and Noise Ratio (SINR) for a received signal that an ABS receives, NI represents a UL Noise and Interference (NI) level measured by the ABS, and Offset represents power compensation value. The NI is broadcasted by the ABS.

The $SINR_{Target}$ is determined differently depending on whether the signal an AMS transmits is a data signal or a control signal. The ABS determines $SINR_{Target}$ for each control signal and broadcasts the determined $SINR_{Target}$. The ABS determines $SINR_{Target}$ for a data signal in accordance with Equation (2) below, and transmits $SINR_{Target}$ to an associated AMS.

$$SINR_{Target} = 10 \cdot log10(max(10^{(SINR_{MIN}[dB]/10)}, \gamma_{IoT} \cdot SIR_{DL} - \alpha)) - \beta \cdot 10 log10(TNS) \quad \ldots (2)$$

where $SINR_{MIN}$ represents SINR that an ABS sets and broadcasts, and which corresponds to a minimum rate of an AMS, $\gamma_{IoT}$ represents an adjustment factor used to adjust Interference over Thermal noise (IoT) for a UL, $SIR_{DL}$ represents a DL Signal to Interference Ratio (SIR) measured by an AMS, $\alpha$ represents an adjustment factor determined by taking into account the number of antennas used by an ABS, $\beta$ represents an adjustment factor for determining power normalize if a data signal transmitted by an AMS is a multi-stream when an ABS receives it, and Total Number of Stream (TNS) represents the total number streams. If Multiple Input Multiple Output (MIMO) used in the IEEE 802.16m communication system is Single User MIMO (SU-MIMO), the TNS represents the total number of streams for an AMS. If MIMO used in the IEEE 802.16m communication system is Multi User MIMO (MU-MIMO), the TNS represents a sum of the total number of streams for each of AMSs.

In Equation (1), Offset is classified into $Offset_{Data}$ and $Offset_{Control}$ depending on whether the signal that an AMS transmits is a data signal or a control signal. $Offset_{Data}$ represents Offset used when the signal an AMS transmits is a data signal, while $Offset_{Control}$ represents Offset used when the signal an AMS transmits is a control signal. $Offset_{Data}$ and $Offset_{Control}$ may be updated using message-based signaling. Assuming that Offset currently stored in an AMS includes $Offset_{Data}\_c$ and $Offset_{Control}\_c$, if an ABS transmits new $Offset_{Data}$ and $Offset_{Control}$ (i.e., $Offset_{Data}\_$new and $Offset_{Control}\_$new) using a message, an AMS updates $Offset_{Data}$ and $Offset_{control}$ from $Offset_{Data}\_c$ and $Offset_{Control}\_c$ to $Offset_{Data}\_$new and $Offset_{Control}\_$new.

Assuming that an AMS can update Offset to spontaneously adjust its UL Tx power, Offset may be included as Offset'+OffsetMS by adding OffsetMS representing an adjustment value adjusted by the AMS. In this case, the UL Tx power control scheme in Equation (1) may be represented as Equation (3) below. The AMS may adjust Offset when performing, for example, an Initial Ranging process, a Periodic Ranging process, and a BandWidth (BW) request (REQ) preamble code transmission process. A detailed description of the method in which the AMS adjusts Offset, will be omitted.

$$P \, [dBm] = L + SINR_{Target} + NI + Offset' + OffsetMS \quad \ldots \ldots \ldots (3)$$

As for L in Equation (1), $SIR_{DL}$ in Equation (2), and OffsetMS in Equation (3), an ABS may not recognize them before they are reported by an AMS. Therefore, according to an exemplary embodiment of the present invention, an AMS may transmit the L, $SIR_{DL}$. and QffsetMS to the BS. However, if all AMSs always report the L, $SIR_{DL}$ and OffsetMS to the BS, signaling overhead may increase. Thus, AMSs are set to report the L, $SIR_{DL}$ and OffsetMS to the ABS only when they meet report conditions. The report conditions may include, for example, a periodic condition allowing AMSs to send the report when a predetermined set time has elapsed, and an event driven condition allowing AMSs to send the report if at least one of the parameters L, $SIR_{DL}$ and OffsetMS, given when the AMSs have last reported their UL Tx power statuses, becomes greater than or equal to a predetermined threshold. Although at least one of the parameters is assumed herein to become greater than or equal to a predetermined threshold in the event driven condition, it will be understood by those of ordinary skill in the art that exemplary embodiments of the present invention may be applied to other situations such as at least one of the parameters becomes lower than a predetermined threshold.

Each of the periodic condition and the event driven condition is described below.

First, the periodic condition is as defined in Equation (4), and the event driven condition is as defined in Equation (5).

$$n - n\_last \geq txPowerReportPeriodicalInterval \quad \ldots \ldots \ldots (4)$$

|M(n_last) - M(n)| ≥ txPowerReportThreshold
and

$$n - n\_last \geq txPowerReportMinimumInterval \qquad \dots\dots (5)$$

where n represents a frame index of the current time for an AMS, and n_last represents a frame index of the time the AMS has last reported its UL Tx power status.

M(n) in Equation (5) represents a function defining parameters for a frame index n as input parameters, and can be expressed as in Equation (6) below.

$$M(n) \; = \; L + SINR_{Target}(n) + OffsetMS(n) \qquad \dots\dots (6)$$

As shown in Equation (6), M(n) is represented using the parameters the AMS has measured or reported.

In Equation (5), txPowerReportThreshold may be realized with, for example, a 4-bit unsigned integer, and will be assumed to be unit Tx power of 0.5 [dB]. The txPowerReportThreshold may mean 'infinite' if its value is '1111'. Each of txPowerReportPeriodicalInterval in Equation (4) and txPowerReportMinimumInterval in Equation (5) may be realized with, for example, a 4-bit unsigned integer, and the txPowerReportPeriodicalInterval and txPowerReportMinimumInterval may mean 'infinite' if their values are '1111'. The txPowerReportThreshold, txPowerReportPeriodicalInterval, and txPowerReportMinimumInterval are transmitted from an ABS to an AMS.

As a result, Equation (4) represents a UL Tx power status reporting scheme for the periodic condition in which an AMS reports its UL Tx power status after a lapse of a predetermined set time (i.e., txPowerReportPeriodicalInterval) starting at the time it has previously reported its UL Tx power status, and Equation (5) represents a UL Tx power status reporting scheme for the event driven condition in which an AMS reports its UL Tx power status if a difference between M(n) at the time the AMS has last reported its UL Tx power status and M(n) at the current time, is greater than or equal to a predetermined threshold, i.e., txPowerReportThreshold. However, in the UL Tx power status reporting scheme for the event driven condition, even if the difference between M(n) at the time the AMS has last reported its UL Tx power status and M(n) at the current time, is greater than or equal to the threshold, a difference between the time the AMS has last reported its UL Tx power status and the time the AMS presently desires to report its UL Tx power status should be greater than or equal to a predetermined set time, i.e., txPowerReportMinimumInterval.

As described above, the parameters for the UL Tx power status the AMS should report to the ABS, include L, $SINR_{Target}(n)$, and OffsetMS(n) as shown in Equation (6), and the AMS reports OffsetMS(n) to the ABS as is, and reports L and $SINR_{Target}(n)$ after changing as follows. L, a path loss measured by an AMS, may cause significant signaling overhead because of a very large range of its value. To reduce the range of the value, the AMS reports a sum of L and an NI having the opposite sign thereof, instead of L. The AMS may report only L. $SINR_{Target}$ is a target SINR for a received signal that the ABS receives. For a control channel, since the ABS sets $SINR_{Target}$ by itself, the AMS is not required to report $SINR_{Target}$ to the ABS, and for a data channel, the AMS reports the $SIR_{DL}$ measured by the AMS, instead of $SINR_{Target}$.

In order for an AMS meeting the report conditions to report its UL Tx power status, the AMS may use, for example, a UL Tx power status report header (or Uplink Power Status Report Header) according to an exemplary embodiment of the present invention. A format of the UL Tx power status report header may be as shown in Table 1 below.

Table 1

| Syntax | Size(bit) | Notes |
|---|---|---|
| Uplink Power Status Report Header(){ | | |
| FID | 4 | Flow Identifier. Set to 0001. |
| Type | 5 | MAC signaling header type = 0b00 101 |
| Length | 3 | Indicates the length of the signaling header in bytes: 0b101: 5 bytes |

(continued)

| Syntax | Size(bit) | Notes |
|---|---|---|
| ULPC Parameters Updating Indicator | 1 | Indicates whether the AMS has updated its ULPC parameters from AAI_SCD: 0: No ULPC parameters changed compared to previous reporting. 1: The confirmation of new ULPC parameters from AAI SCD applied. |
| Configuration Change Count | 4 | Only valid if ULPC Parameters Updating Indicator == 0b1. The value is the same as "Configuration Change" in the latest AAI SCD message. |
| txPowerPsdBase | 8 | txPowerPsdBase ( PSD(base) ) is coded using 8 bits in 0.5 dBm steps ranging from -74 dBm (coded 0x00) to 53.5 dBm (coded 0xFF). |
| txSirDownlink | 9 | txSirDownlink ($SIR_{DL}$) is coded using 9 bits in 1/8dB steps ranging from -12dB (coded 0x000) to 51.875 (coded 0x1ff). |
| OffsetMS | 6 | OffsetMS using 0.5dB step ranging from -15dab (coded 0x00) to 16dB (coded 0x2F) |
| } | | |

In Table 1, an 'FID' field represents a flow identifier, and its value is set to, for example, '0001', since the UL Tx power status report header is a Medium Access Control (MAC) signaling header. A 'Type' field represents a type of a MAC signaling header, and indicates that the MAC signaling header is a UL Tx power status report header, if its value is, for example, '00101'. A 'Length' field represents a length of the UL Tx power status report header, and a 'UL Parameters Updating Indicator' field indicates whether UL Tx Power Control (ULPC) parameters included in an Advanced Air Interface System Configuration Descriptor (AAI_SCD) message have been updated. The 'UL Parameters Updating Indicator' field may be realized with, for example, 1 bit. The 'UL Parameters Updating Indicator' field indicates that UL Tx power control parameters included in the AAI_SCD message have not been updated, if its value is, for example, '0', and indicates that UL Tx power control parameters included in the AAI_SCD message have been newly configured, or have been changed, if its value is, for example, '1'.

A 'Configuration Change Count' field is set to the same value as a field value of a 'Configuration Change Count' field included in the AAI_SCD message the AMS has last received. The 'Configuration Change Count' field is valid only when a field value of the 'UL Parameters Updating Indicator' field is '1'. As the UL Tx power status report header includes the 'Configuration Change Count' field, an ABS may determine a version of the AAI_SCD message based on which an AMS controls its UL Tx power, based on the 'Configuration Change Count' value included in the 'Configuration Change Count' field.

A 'txPowerPSDBase' field indicates a sum of L and NI, or indicates L. A field value of the 'txPowerPSDBase' field indicates a sum of L and NI, if the AMS is determined to report a sum of L and NI, while a field value of the 'txPowerPSDBase' field indicates L if the AMS is determined to report L. A 'txSIRDownlink' field indicates a value of SIRDL.

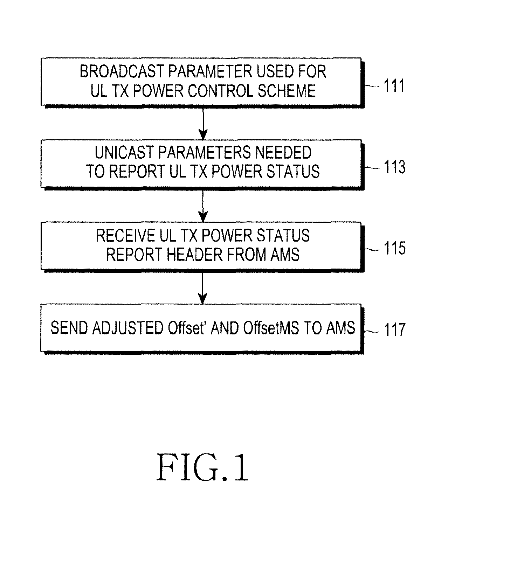

A process of receiving a report on a UL Tx power status by an ABS in an IEEE 802.16m communication system according to an exemplary embodiment of the present invention is described below with reference to FIG. 1.

FIG. 1 illustrates a process of receiving a report on a UL Tx power status by an ABS in an IEEE 802.16m communication system according to an exemplary embodiment of the present invention.

Referring to FIG. 1, in step 111, the ABS broadcasts a parameter used for the UL Tx power control scheme. In step 113, the ABS unicasts parameters (i.e., txPowerReportThreshold, txPowerReportMinimumInterval, and txPowerReportPeriodicalInterval) needed for UL Tx power status report to each of AMSs. Upon receiving a UL Tx power status report header from an AMS in step 115, the ABS adjusts Offset' and OffsetMS for the AMS according to the parameters included in the receive UL Tx power status report header and transmits the adjusted Offset' and OffsetMS to the AMS in step 117.

Although not illustrated in FIG. 1, the ABS may change the parameters needed for the UL Tx power control scheme based on the parameters included in the UL Tx power status report header received from the AMS.

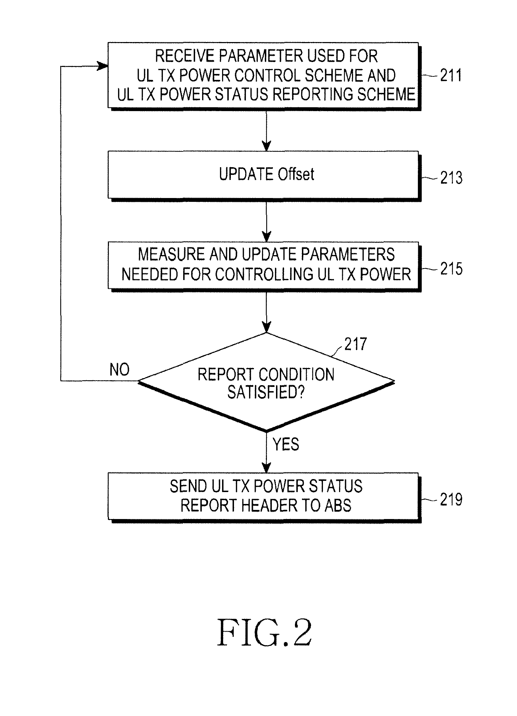

A process of reporting a UL Tx power status by an AMS in an IEEE 802.16m communication system according to an exemplary embodiment of the present invention is described below with reference to FIG. 2.

FIG. 2 illustrates a process of reporting a UL Tx power status by an AMS in an IEEE 802.16m communication system according to an exemplary embodiment of the present invention.

Referring to FIG. 2, in step 211, the AMS receives a parameter used for the UL Tx power control scheme, which an ABS broadcasts, and a parameter used for the UL Tx power status reporting scheme. In step 213, the AMS updates, for example, Offset among the received parameters. In step 215, the AMS measures and updates the parameters needed for the UL Tx power control scheme. In step 217, the AMS checks if it meets report conditions. If so, the AMS transmits a UL Tx power status report header indicating the updated parameters to the ABS in step 219.

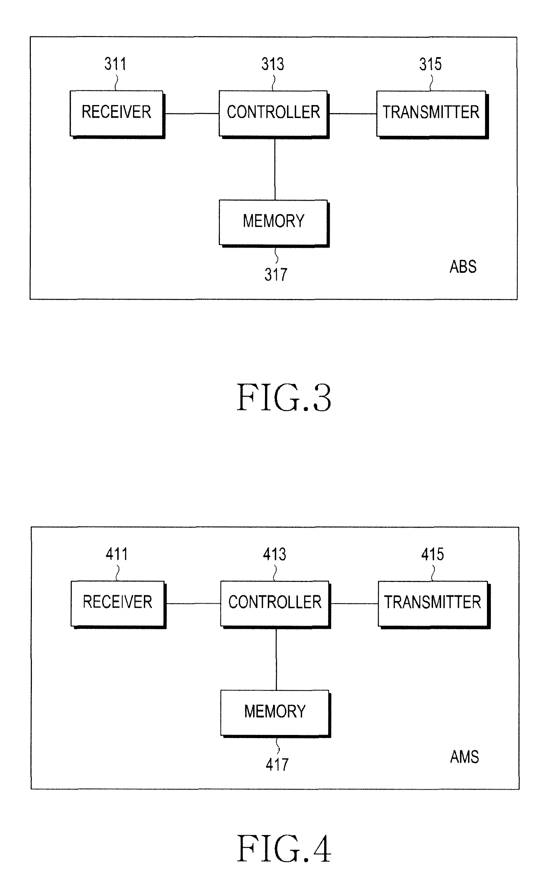

An internal structure of an ABS in an IEEE 802.16m communication system according to an exemplary embodiment of the present invention is described below with reference to FIG. 3.

FIG. 3 illustrates an internal structure of an ABS in an IEEE 802.16m communication system according to an exemplary embodiment of the present invention.

Referring to FIG. 3, the ABS includes a receiver 311, a controller 313, a transmitter 315, and a memory 317. Although not illustrated for clarity, the ABS may also include additional components.

The controller 313 controls the overall operation of the ABS. The controller 313 controls the overall operation of the ABS according to the UL Tx power control scheme and the UL Tx power status reporting scheme, and a detailed description thereof has been made above.

The controller 313 controls the transmitter 315 to transmit various parameters for controlling UL Tx power using the UL Tx power control scheme, and various parameters for using the UL Tx power status reporting scheme, as described above.

The receiver 311 receives various parameters needed for controlling the UL Tx power and the UL Tx power status report header, from the AMS, as described above. The memory 317 stores a variety of information needed for an operation of the ABS.

While the receiver 311, the controller 313, the transmitter 315, and the memory 317 are realized as separate units in FIG. 3, they may be integrated in a single unit.

An internal structure of an AMS in an IEEE 802.16m communication system according to an exemplary embodiment of the present invention will now be described with reference to FIG. 4.

FIG. 4 illustrates an internal structure of an AMS in an IEEE 802.16m communication system according to an exemplary embodiment of the present invention.

Referring to FIG. 4, the AMS includes a receiver 411, a controller 413, a transmitter 415, and a memory 417. Although not illustrated for purposes of clarity, the AMS may also include other components.

The controller 413 controls overall operation of the AMS. The controller 413 controls the overall operation of the AMS according to the UL Tx power control scheme and the UL Tx power status reporting scheme, and a detailed description thereof has been made above.

The controller 413 controls the transmitter 415 to transmit various parameters needed for controlling the UL Tx power and the UL Tx power status report header, as described above.

The receiver 411 receives various parameters needed for the UL Tx power control scheme and the UL TX power status reporting scheme, from the ABS, and a detailed description thereof has been made above. The memory 417 stores a variety of information needed for an operation of the AMS.

While the receiver 411, the controller 413, the transmitter 415, and the memory 417 are realized as separate units in FIG. 4, they may be integrated in a single unit.

As is apparent from the foregoing description, exemplary embodiments of the present invention enable an MS to trigger power control by reporting its UL Tx power status in a mobile communication system, making it possible for the MS to adjust its UL Tx power and report the UL Tx power status based on the adjusted UL Tx power.

In addition, exemplary embodiments of the present invention enable an MS to trigger power control by reporting its UL Tx power status, making it possible for a BS to accurately detect a UL Tx power status of the MS, resulting in improvement of the UL Tx power control performance of the mobile communication system and thus enabling accurate scheduling.

While the invention has been shown and described with reference to certain exemplary embodiments thereof, it will be understood by those skilled in the art that various changes in form and details may be made therein without departing from the spirit and scope of the invention as defined by the appended claims and their equivalents.

**Claims**

1. A method for reporting an UpLink (UL) transmission power status by an Advanced Mobile Station (AMS) in a mobile communication system, the method comprising:

   transmitting to an Advanced Base Station (ABS) a UL transmission power status report header, a sum of a DownLink (DL) path loss measured by the AMS and a UL Noise and Interference (NI) level measured by the ABS, and a DL Signal to Interference Ratio (SIR) measured by the AMS,
   wherein the UL transmission power status report header includes a UL transmission power control parameter updating indicator indicating whether UL transmission power control parameters have been updated.

2. The method of claim 1, wherein if the UL transmission power control parameter updating indicator indicates a change in the UL transmission power control parameters, the UL transmission power status report header further includes the same value as a Configuration Change Count included in an Advanced Air Interface System Configuration Descriptor (AAI_SCD) message that the AMS has last received.

3. The method of claim 1, wherein the UL transmission power status report header further includes a Flow Identifier (FID) field, a type field, and a length field,
wherein the FID field is set to a value indicating that the UL transmission power status report header is a Medium Access Control (MAC) signaling header,
wherein the type field is set to a value indicating that a type of the MAC signaling header is a UL transmission power status report header, and
wherein the length field indicates a length of the UL transmission power status report header.

4. The method of claim 1, wherein the UL transmission power control parameters are included in an Advanced Air Interface System Configuration Descriptor (AAI_SCD) message.

5. A method for receiving a report on an UpLink (UL) transmission power status by an Advanced Base Station (ABS) in a mobile communication system, the method comprising:

receiving from an Advanced Mobile Station (AMS) a UL transmission power status report header, a sum of a DownLink (DL) path loss measured by the AMS and a UL Noise and Interference (NI) level measured by the ABS, and a DL Signal to Interference Ratio (SIR) measured by the AMS,
wherein the UL transmission power status report header includes a UL transmission power control parameter updating indicator indicating whether UL transmission power control parameters have been updated.

6. The method of claim 5, wherein if the UL transmission power control parameter updating indicator indicates a change in the UL transmission power control parameters, the UL transmission power status report header further includes the same value as a Configuration Change Count included in an Advanced Air Interface System Configuration Descriptor (AAI_SCD) message that the AMS has last received.

7. The method of claim 5, wherein the UL transmission power status report header further includes a Flow Identifier (FID) field, a type field, and a length field,
wherein the FID field is set to a value indicating that the UL transmission power status report header is a Medium Access Control (MAC) signaling header,
wherein the type field is set to a value indicating that a type of the MAC signaling header is a UL transmission power status report header, and
wherein the length field indicates a length of the UL transmission power status report header.

8. The method of claim 5, wherein the UL transmission power control parameters are included in an Advanced Air Interface System Configuration Descriptor (AAI_SCD) message.

9. An Advanced Mobile Station (AMS) adapted to perform the method of one of claims 1 to 4.

10. An Advanced Base Station (ABS) adapted to perform the method of one of claims 5 to 8.

BROADCAST PARAMETER USED FOR
UL TX POWER CONTROL SCHEME ~ 111

UNICAST PARAMETERS NEEDED
TO REPORT UL TX POWER STATUS ~ 113

RECEIVE UL TX POWER STATUS
REPORT HEADER FROM AMS ~ 115

SEND ADJUSTED Offset' AND OffsetMS TO AMS ~ 117

FIG.1

RECEIVE PARAMETER USED FOR
UL TX POWER CONTROL SCHEME AND
UL TX POWER STATUS REPORTING SCHEME ~211

UPDATE Offset ~213

MEASURE AND UPDATE PARAMETERS
NEEDED FOR CONTROLLING UL TX POWER ~215

217

NO ← REPORT CONDITION
SATISFIED?

YES

SEND UL TX POWER STATUS
REPORT HEADER TO ABS ~219

# FIG.2

FIG.3

FIG.4

Europäisches
Patentamt

European
Patent Office

Office européen
des brevets

# EUROPEAN SEARCH REPORT

Application Number

EP 11 17 3539

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 1 892 848 A1 (SAMSUNG ELECTRONICS CO LTD [KR]) 27 February 2008 (2008-02-27) <br> * abstract * <br> * paragraphs [0032] - [0046], [0055] - [0069] * <br> * figures 1, 3 * <br> ----- | 1-10 | INV. <br> H04W52/10 <br> H04W52/14 <br> H04W52/54 |
| A | US 2009/262675 A1 (TSAI JR SHIAN [US] TSAI J R SHIAN [US]) 22 October 2009 (2009-10-22) <br> * paragraphs [0033] - [0041] * <br> * claims 1, 6, 8 * <br> * figure 3 * <br> ----- | 1-10 | |
| A | DONGCHEOL KIM ET AL: "Proposed Text on Power Control Section for the IEEE 802.16m Amendment", <br> IEEE C802.16M-09/0634, <br> , <br> 2 March 2009 (2009-03-02), pages 1-9, XP002615056, <br> Retrieved from the Internet: <br> URL:http://ieee802.0rg/16 <br> [retrieved on 2010-12-22] <br> * the whole document * <br> ----- | 1-10 | TECHNICAL FIELDS SEARCHED (IPC) <br><br> H04W |

The present search report has been drawn up for all claims

| Place of search | Date of completion of the search | Examiner |
|---|---|---|
| Munich | 26 September 2011 | Helms, Jochen |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

......................................................................................

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 11 17 3539

This annex lists the patent family members relating to the patent documents cited in the above-mentioned European search report.
The members are as contained in the European Patent Office EDP file on
The European Patent Office is in no way liable for these particulars which are merely given for the purpose of information.

26-09-2011

| Patent document cited in search report | | | Publication date | Patent family member(s) | | | Publication date |
|---|---|---|---|---|---|---|---|
| EP 1892848 | A1 | | 27-02-2008 | CN | 101517934 | A | 26-08-2009 |
| | | | | JP | 2010502094 | A | 21-01-2010 |
| | | | | WO | 2008023959 | A1 | 28-02-2008 |
| | | | | KR | 20080018551 | A | 28-02-2008 |
| | | | | US | 2008051028 | A1 | 28-02-2008 |
| US 2009262675 | A1 | | 22-10-2009 | NONE | | | |

For more details about this annex : see Official Journal of the European Patent Office, No. 12/82